# EUROPÄISCHE PATENTANMELDUNG

(11) **EP 2 056 088 A2**
(43) Veröffentlichungstag der Anmeldung: **06.05.2009**
(21) Anmeldenummer: 08018318.9
(22) Anmeldetag: 20.10.2008
(51) Int. Cl.: G01L 9/06, G01L 13/02, G01L 19/06

(54) **Druckmessumformer, Verfahren zur Zustandsüberwachung eines Druckmessumformers und Drucksensor**

(30) Priorität: 31.10.2007 DE 102007052395
(71) Anmelder: KG transmitter components GmbH, 32547 Bad Oeynhausen (DE)
(72) Erfinder: Galinski, Udo, 32754 Porta Westfalica (DE)
(74) Vertreter: Gesthuysen, von Rohr & Eggert

(57) **Zusammenfassung**

Die Erfindung betrifft einen Druckmeßumformer für einen Drucksensor (2) zur Ermittlung wenigstens eines Drucks (pₐ, p_{b}) in einem Prozeßmedium (3a, 3b) mit einem Gehäuse (4), mit einer Trennmembran (5a, 5b), wenigstens einem ersten Druckmeßelement (6a, 6b), einem Kontaktmedium (7a, 7b), wenigstens einem ersten Anschlußelement (8a, 8b) und mit wenigstens einer ersten Dichtung (9a, 9b), wobei die Trennmembran (5a, 5b) das Prozeßmedium (3a, 3b) von dem Kontaktmedium (7a, 7b) trennt, das Kontaktmedium (7a, 7b) den über die Trennmembran (5a, 5b) vermittelten Druck (pₐ, p_{b}) des Prozeßmediums (3a, 3b) zu dem ersten Druckmeßelement (6a, 6b) überträgt, die erste Dichtung (9a, 9b) das erste Anschlußelement (8a, 8b) aufnimmt und wobei das Gehäuse (4), die Trennmembran (5a, 5b) und die erste Dichtung (9a, 9b) eine erste Druckkammer (10a, 10b) bilden.

Es ist Aufgabe der Erfindung, die bei aus dem Stand der Technik bekannten Druckmeßumformem auftretenden Nachteile - zumindest teilweise - zu vermeiden, insbesondere die Erkennung eines Fehlers im Bereich der ersten Dichtung zu ermöglichen.

Die Aufgabe ist dadurch gelöst, daß auf der der ersten Druckkammer (10a, 10b abgewandten Seite der ersten Dichtung (9a, 9b) eine zweite Druckkammer (14) vorgesehen ist und in der zweiten Druckkammer (14) ein zweites Druckmeßelement (15) angeordnet ist.

## Beschreibung

Die Erfindung betrifft einen Druckmeßumformer für einen Drucksensor zur Ermittlung wenigstens eines Drucks in einem Prozeßmedium mit einem Gehäuse, einer Trennmembran, wenigstens einem ersten Druckmeßelement, einem Kontaktmedium, wenigstens einem ersten Anschlußelement und mit wenigstens einer ersten Dichtung, wobei die Trennmembran das Prozeßmedium von dem Kontaktmedium trennt, das Kontaktmedium den über die Trennmembran vermittelten Druck des Prozeßmediums zu dem ersten Druckmeßelement überträgt, die erste Dichtung das erste Anschlußelement aufnimmt und wobei das Gehäuse, die Trennmembran und die erste Dichtung eine erste Druckkammer bilden. Die Erfindung betrifft ferner ein Verfahren zur Zustandsüberwachung eines solchen Druckmeßumformers als auch einen Drucksensor, der mit einem derartigen Druckmeßumformer ausgestattet ist.

Druckmeßumformer der in Rede stehenden Art sind seit längerem bekannt und dienen zur Wandlung des zu erfassenden Drucks in einem Prozeßmedium in ein Meßsignal, das weiterverarbeitet werden kann, beispielsweise zur Anzeige gebracht wird oder im Rahmen von Prozeßsteuerungsaufgaben im weitesten Sinne verwendet wird.

Die physikalischen Effekte, die grundsätzlich zur Erfassung eines Drucks in einem Prozeßmedium bzw. in der ersten Druckkammer des Druckmeßumformers genutzt werden, und um den Druck in eine korrespondierende Größe zu wandeln, sind sehr unterschiedlich und beruhen entweder auf mechanischen oder hydrostatischen Prinzipien, häufig aber auf Verfahren, die einen elektrisch auswertbaren Effekt zeigen (z. B. elastische Druckmeßfühler, elektrische Messung der Verformung, kapazitive Messung der Durchbiegung, Verformungsmessung mit Dehnungsmeßstreifen, induktive oder kapazitive Wegmessung oder piezoelektrische, magnetoelastische oder Widerstands-Druckmeßfühler). Auf das genaue Verfahren der Druckwandlung kommt es im Rahmen der hier vorgestellten Erfindung nicht an. Auch ist es vorliegend ohne Bedeutung, ob es sich bei dem Druckmeßumformer um einen Umformer zur Absolut-, Referenz- oder Relativdruckmessung handelt; die im folgenden dargelegten Überlegungen lassen sich auf alle genannten Typen von Druckmeßumformern anwenden.

Die eingangs beschriebene Ausgestaltung des hier in Rede stehenden Druckmeßumformers mit einer Trennmembran, die das außerhalb des Druckmeßumformers befindliche Prozeßmedium von dem Innenraum des Druckmeßumformers trennt, dient in erster Linie dazu, den Innenraum des Druckmeßumformers, insbesondere aber das Druckmeßelement im Druckmeßumformer, vor aggressiven Prozeßmedien zu schützen. Die Trennmembran ist aus diesem Grund üblicherweise aus einem sehr korrosionsbeständigen Material gefertigt, wie beispielsweise aus rostfreiem Stahl, Hastelloy oder Tantal, wobei die Trennmembran sehr dünn ausgelegt sein muß, beispielsweise im Bereich von 30 µm bis 50 µm, damit die Übertragung des Drucks vom Prozeßmedium auf das - meist fluidische - Kontaktmedium in der ersten Druckkammer möglichst unbeeinflußt durch die Trennmembran erfolgen kann, so daß die Dynamik des Druckmeßumformers möglichst wenig verringert wird.

Druckmeßumformer können je nach Einsatzgebiet einer großen mechanischen Beanspruchung ausgesetzt sein, beispielsweise durch Druckimpulse, Temperaturschwanken und chemisch aggressive Prozeßmedien, so daß die sehr dünne und damit mechanisch empfindliche Trennmembran unter Umständen soweit geschädigt wird, daß sie undicht wird und das Prozeßmedium nicht mehr von dem Innenraum des Druckmeßumformers fernhalten kann. Das Eindringen eines chemisch aggressiven Prozeßmediums in den Innenraum des Druckmeßumformers hat meist die Zerstörung des Druckmeßumformers zur Folge, was häufig zu erheblichen Störungen innerhalb des gesamten Prozesses führt, da die von dem Druckmeßumformer bzw. dem Drucksensor, in dem der Druckmeßumformer eingesetzt wird, bereitgestellten Zustandsgrößen meist auf den Prozeß im Rahmen einer Steuerung oder Regelung zurückwirken.

Die Folgen eines in den Druckmeßumformer eindringenden Prozeßmediums können jedoch wesentlich gravierender sein, insbesondere dann, wenn das Prozeßmedium entzündlich oder explosiv ist. In diesem Fall besteht die Gefahr, daß sich das Prozeßmedium an dem in der ersten Druckkammer befindlichen ersten Druckmeßelement entzündet, wenn dies mit elektrischen Potentialen verbunden ist, was bei den meisten Druckmeßumformern der Fall ist. Die größte Gefahr besteht darin, daß sich die Flamme des in der ersten Druckkammer an dem ersten Druckmeßelement entzündeten Prozeßmediums über die erste Druckkammer hinaus in die äußere Prozeßleitung fortpflanzt, was zu einer Explosion der gesamten das Prozeßmedium führenden Bereiche des zu- und ableitenden Prozesses führen kann. Eine solche Flammenausbreitung kann durch geeignete konstruktive Maßnahmen im Bereich der ersten Druckkammer verhindert werden; mit einer derartigen "Flammenbarriere" ausgestattete Druckmeßumformer werden als "Ex-d" explosionssicher bezeichnet.

Aus der Praxis sind jedoch weitere Fehlerfälle bekannt, die die zuvor genannten Schutzmechanismen nicht abdecken. Ein dokumentierter gefährlicher Fehlerfall besteht darin, daß die erste Dichtung der ersten Druckkammer undicht wird, so daß das Kontaktmedium aus der ersten Druckkammer entweichen kann und im Falle einer zusätzlichen Verletzung der Trennmembran ein entzündliches Prozeßmedium ungehindert durch die erste Druckkammer über die erste Dichtung in den Bereich des Druckmeßumformers gelangen kann, der auf jener Seite der ersten Dichtung liegt, die der ersten Druckkammer abgewandt ist. Auf dieser, von der ersten Druckkammer abgewandten Seite der ersten Dichtung befindet sich üblicherweise eine - zum Drucksensor gehörende - elektrische Beschaltung des Druckmeßumformers, so daß hier eine erhöhte Wahrscheinlichkeit der Entzündung des Prozeßmediums gegeben ist. Das entzündliche Prozeßmedium hat hier genügend Raum, um sich in solchen Mengen zu entzünden, daß die eingangs geschilderten Schutzmechanismen im Bereich der ersten Druckkammer keinen Schutz vor einem Durchschlag der Explosion mehr gewährleisten. Zur Undichtigkeit führende Schwachstellen sind insbesondere die Durchführungen in der ersten Dichtung, in denen Anschlußelemente geführt werden, mit denen z. B. eine elektrische Verbindung des ersten Druckmeßelements von außerhalb der ersten Druckkammer her möglich ist.

Es ist daher Aufgabe der Erfindung, die aufgezeigten Nachteile bei den bekannten Druckmeßumformern - zumindest teilweise - zu vermeiden, insbesondere die Erkennung eines Fehlers im Bereich der ersten Dichtung zu ermöglichen.

Die aufgezeigte Aufgabe ist erfindungsgemäß zunächst und im wesentlichen bei dem in Rede stehenden Druckmeßumformer dadurch gelöst, daß auf der der ersten Druckkammer abgewandten Seite der ersten Dichtung eine zweite Druckkammer vorgesehen ist, und in der zweiten Druckkammer ein zweites Druckmeßelement angeordnet ist. Durch diese konstruktive Maßnahme wird ermöglicht, daß auch der Raum bezüglich des in dem Raum herrschenden Drucks her beobachtet werden kann, der auf der der ersten Druckkammer abgewandten Seite der ersten Dichtung liegt und der eine besondere Explosionsgefährdung mit sich bringt. Ein Leck in der ersten Dichtung der ersten Druckkammer wird immer eine - unerwartete - Druckänderung innerhalb der zweiten Druckkammer hervorrufen, die von dem zweiten Druckmeßelement in der zweiten Druckkammer detektierbar ist.

In einer besonders vorteilhaften Ausgestaltung der Erfindung ist der Druckmeßumformer so ausgestaltet, daß im fehlerfreien, dichtenden Zustand der ersten Dichtung der Druck in der zweiten Druckkammer im wesentlichen unabhängig vom Druck in der ersten Druckkammer ist. In diesem Fall ist eine Undichtigkeit in der ersten Dichtung folglich dadurch erkennbar, daß das zweite Druckmeßelement einen Druck registriert, der eine Abhängigkeit vom Druck in der ersten Druckkammer zeigt oder - im einfachsten Fall - einfach nur zeitveränderlich ist.

In einem anderen Ausführungsbeispiel ist der erfindungsgemäße Druckmeßumformer so ausgestaltet, daß im fehlerfreien, dichtenden Zustand der ersten Dichtung der Druck in der zweiten Druckkammer in einer bestimmten Abhängigkeit zum Druck in der ersten Druckkammer steht. Dieses Ausführungsbeispiel eröffnet die Möglichkeit, ein Leck in der ersten Dichtung der ersten Druckkammer zu erkennen, wenn der von dem zweiten Druckmeßelement aufgenommene Druck in der zweiten Druckkammer dem von dem ersten Druckelement in der ersten Druckkammer aufgenommenen Druck nicht mehr in der erwarteten Weise folgt. Dieser Ausgestaltung der Erfindung liegt die Erkenntnis zugrunde, daß die Druckübertragungsstrecke von dem Prozeßmedium über die erste Druckkammer, über die erste Dichtung, über die zweite Druckkammer bis zum zweiten Druckmeßelement eine Übertragungsstrecke mit einem gewissen - dämpfenden - Übertragungsverhalten darstellt. Dieses Übertragungsverhalten wird durch Veränderung in den mechanischgeometrischen Gegebenheiten der beteiligten Übertragungslemente - und so auch durch eine Veränderung in der Dichtigkeit der ersten Dichtung, die die erste Druckkammer von der zweiten Druckkammer trennt - beeinflußt. Veränderungen in der Dichtigkeit der ersten Dichtung sind jedenfalls daran erkennbar, daß der von dem zweiten Druckmeßelement aufgenommene Druck in der zweiten Druckkammer dem von dem ersten Druckmeßelement in der ersten Druckkammer aufgenommenen Druck schneller oder langsamer oder auch mehr oder weniger gedämpft folgt.

In einer weiteren Ausgestaltung der Erfindung weist die zweite Druckkammer eine zweite Dichtung auf, wobei die zweite Dichtung wenigstens ein zweites Anschlußelement aufnimmt und über das zweite Anschlußelement das zweite Druckmeßelement und/oder - mittelbar - das erste Druckmeßelement kontaktiert ist. insbesondere von außerhalb der zweiten Druckkammer.

Wenn davon die Rede ist, daß die erste Druckkammer eine erste Dichtung und die zweite Druckkammer eine zweite Dichtung aufweist, dann müssen diese Dichtungen nicht zwingend separat von dem Gehäuse ausgestaltet sein, sondern können vielmehr auch in dem Gehäuse bzw. in einer Gehäusewand ausgestaltet sein, so daß das Gehäuse dichtend mit dem ersten Anschlußelement bzw. dem zweiten Anschlußelement abschließt.

Bei den Anschlußelementen handelt es sich beispielsweise um elektrische Anschlüsse zur Kontaktierung des ersten Druckmeßelements bzw. des zweiten Druckmeßelements, es können jedoch auch Anschlüsse für kommunizierende Röhren im Falle eines Differenzdrucksensors sein oder Befüllstutzen zum Befüllen der ersten Druckkammer mit dem Kontaktmedium. Gleichwohl können die erste Dichtung und die zweite Dichtung auch als solche erkennbar separat ausgeführt sein, wobei die erste Dichtung und die zweite Dichtung in diesem Fall bevorzugt aus einem Keramik- oder Glaswerkstoff hergestellt sind, vorzugsweise durch Sinterung. Derartige Dichtungen weisen je nach verwendetem Ausgangsstoff eine hohe Beständigkeit gegenüber auch aggressiven Prozeßmedien auf.

Die zuvor aufgezeigte Aufgabe ist auch gelöst durch ein Verfahren zur Zustandsüberwachung des erfindungsgemäßen Druckmeßumformers, wobei der Druckmeßumformer ein Gehäuse, eine Trennmembran, wenigstens ein erstes Druckmeßelement, ein Kontaktmedium, wenigstens ein erstes Anschlußelement und wenigstens eine erste Dichtung umfaßt, wobei die Trennmembran das Prozeßmedium von dem Kontaktmedium trennt, das Kontaktmedium den über die Trennmembran vermittelten Druck des Prozeßmediums zu dem ersten Druckmeßelement überträgt, die erste Dichtung das erste Anschlußelement aufnimmt, wobei das Gehäuse, die Trennmembran und die erste Dichtung eine erste Druckkammer bilden und wobei auf der der ersten Druckkammer abgewandten Seite der ersten Dichtung eine zweite Druckkammer vorgesehen ist und in der zweiten Druckkammer ein zweites Druckmeßelement angeordnet ist. Angewandt auf einen solchen Druckmeßumformer sieht das erfindungsgemäße Verfahren zunächst und im wesentlichen vor, daß der von dem zweiten Druckmeßelement in der zweiten Druckkammer ermittelte Druckwert mit einem vorgegebenen Druckwert verglichen wird und bei Überschreitung einer vorgegebenen bzw. vorzugebenden Abweichung des für die zweite Druckkammer ermittelten Druckwertes von dem vorgegebenen Druckwert ein Überschreitungssignal ausgegeben wird.

Das erfindungsgemäße Verfahren macht sich den Umstand zu nutze, daß durch das zweite Druckmeßelement in der zweiten Druckkammer erstmals die Möglichkeit geschaffen ist, eine Druckmessung auf der von der ersten Druckkammer abgewandten Seite der ersten Dichtung vorzunehmen und so einen Vergleich anzustellen, zwischen dem Druck bzw. dem Druckverlauf in der zweiten Druckkammer und einem vorgegebenen Druckwert.

Bei einer besonders bevorzugten Ausgestaltung des erfindungsgemäßen Verfahrens wird nicht nur ein Überschreitungssignal ausgegeben, sondern der Druckmeßumformer bzw. das erste Druckmeßelement und/oder das zweite Druckmeßelement des Druckmeßumformers wird bzw. werden elektrisch potentialfrei oder auf ein festes elektrisches Potential geschaltet. Durch diese Maßnahme wird verhindert, daß sich ein in die erste Druckkammer und/oder die zweite Druckkammer eingedrungenes Prozeßmedium an dem ersten Druckmeßelement und/oder an dem zweiten Druckmeßelement und/oder an weiteren, außerhalb der ersten Druckkammer und außerhalb der zweiten Druckkammer liegenden elektrischen Schaltungsteilen aufgrund elektrischer Entladung entzündet.

Wenn der Druckmeßumformer so ausgestaltet ist, daß im fehlerfreien, dichtenden Zustand der ersten Dichtung der Druck in der zweiten Druckkammer im wesentlichen unabhängig vom Druck in der ersten Druckkammer ist, dann wird in einer bevorzugten Ausgestaltung des Verfahrens als vorgegebener Druckwert ein im wesentlichen konstanter Druckwert gewählt, insbesondere jener Wert, den das zweite Druckmeßelement unter "normalen" - z. B. werksseitig vorgegebenen - Verhältnissen erfaßt. Als tolerierbare Abweichung von dem vorgegebenen Druckwert wird bevorzugt nicht eine Null-Abweichung vorgegeben, sondern eine Abweichung von dem vorgegebenen Druckwert, die innerhalb eines Toleranzbandes um diesen vorgegebenen Druckwert liegt. Das Toleranzband ist insbesondere so bemessen, daß alleine durch Temperaturunterschiede bewirkte Druckschwankungen in der zweiten Druckkammer nicht zu einer Ausgabe eines Überschreitungssignals führen.

Wenn der Druckmeßumformer hingegen so ausgestaltet ist, daß im fehlerfreien, dichtenden Zustand der ersten Dichtung der Druck in der zweiten Druckkammer in einer bestimmten Abhängigkeit vom Druck in der ersten Druckkammer steht, dann ist das in Rede stehende Verfahren bevorzugt so ausgestaltet, daß der vorgegebene bzw. vorgebbare Druckwert der von dem ersten Druckelement ermittelte Druck in der ersten Druckkammer ist. So ist gewährleistet, daß durch Vergleich des Drucks in der zweiten Druckkammer und des Drucks in der ersten Druckkammer stets das Druck-Übertragungsverhalten der zweiten Dichtung für die Druckweiterleitung von der ersten Druckkammer in die zweite Druckkammer beobachtet wird und so eine Undichtigkeit zwischen der ersten Druckkammer und der zweiten Druckkammer detektiert wird.

Insbesondere bei dem letztgenannten Verfahren hat sich als besonders vorteilhaft erwiesen, wenn bei der Beurteilung der Abweichung des von dem zweiten Druckmeßelement in der zweiten Druckkammer ermittelten Druckwertes von einem vorgegebenen Druckwert auch die dynamische Veränderung des in der zweiten Druckkammer ermittelten Druckwertes und/oder des vorgegebenen Druckwertes berücksichtigt wird. Damit ist gemeint, daß das Wissen über das dynamische Übertragungsverhalten eines Drucksignals von der ersten Druckkammer in die zweite Druckkammer genutzt wird. Dabei ist es insbesondere sinnvoll, zeitliche Ableitungen der Druckwerte und/oder Totzeiten zwischen den zu vergleichenden Druckwerten zu berücksichtigen.

Letztlich ist die zuvor aufgezeigte Aufgabe auch durch einen Drucksensor gelöst, der einen Druckmeßumformer der vorbeschriebenen Art umfaßt und zusätzlich eine elektronische Auswerteeinrichtung aufweist, die mit dem Druckmeßumformer bzw. mit dem ersten Druckmeßelement und/oder dem zweiten Druckmeßelement signalmäßig verbunden ist, so daß die erfaßten Druckwerte von der Auswerteeinrichtung weiterverarbeitet werden können. Die Auswerteeinrichtung ist dabei so ausgestaltet, daß mit ihr die Durchführung eines der zuvor beschriebenen Verfahren zur Zustandsüberwachung des Druckmeßumformers möglich ist.

Eine konstruktiv besonders einfache Umsetzung des Drucksensors ist dann möglich, wenn die elektronische Auswerteeinrichtung zumindest teilweise in der zweiten Druckkammer vorgesehen ist. Dies ermöglicht grundsätzlich, daß die Auswertung der von dem ersten Druckmeßelement und dem zweiten Druckmeßelement stammenden Signale schon in der zweiten Druckkammer vorgenommen werden kann und die mit dem ersten Druckmeßelement und dem zweiten Druckmeßelement zwangsläufig einhergehenden Signalleitungen nicht mehr aus der zweiten Druckkammer herausgeführt werden müssen. Vorzugsweise wird das zweite Druckmeßelement von der Auswerteeinrichtung umfaßt, insbesondere indem das zweite Druckmeßelement auf einer Platine der Auswerteeinrichtung bzw. auf einer Platine eines ersten Teils der Auswertevorrichtung vorgesehen ist.

Im einzelnen gibt es eine Vielzahl von Möglichkeiten, den erfindungsgemäßen Druckmeßumformer, das erfindungsgemäße Verfahren zur Zustandsüberwachung des Druckmeßumformers und den Drucksensor auszugestalten und weiterzubilden. Dazu wird verwiesen einerseits auf die den Patentansprüchen 1 und 5 nachgeordneten Patentansprüche, andererseits auf die folgende Beschreibung von Ausführungsbeispielen in Verbindung mit der Zeichnung. In der Zeichnung zeigen
- Fig. 1: einen Drucksensor mit einem Druckmeßumformer im fehlerfrei- en Zustand,
- Fig. 2: einen Drucksensor mit einem beschädigten Druckmeßumformer, dessen erste Dichtung in der ersten Druckkammer eine Undich- tigkeit aufweist,
- Fig. 3: einen Drucksensor mit einem Druckmeßumformer, dessen Trennmembran beschädigt ist,
- Fig. 4: einen Drucksensor mit einem Druckmeßumformer, dessen Trennmembran und erste Dichtung in der ersten Druckkammer beschädigt sind,
- Fig. 5: einen Drucksensor gemäß Fig. 1 mit einer in der zweiten Druck- kammer angeordneten Auswerteeinrichtung,
- Fig. 6: eine weitere Variante eines Drucksensors mit einer Auswerteein- richtung außerhalb der zweiten Druckkammer und
- Fig. 7: eine weitere Variante eines Drucksensors mit einer teilweise in der zweiten Druckkammer angeordneten Auswerteeinrichtung.

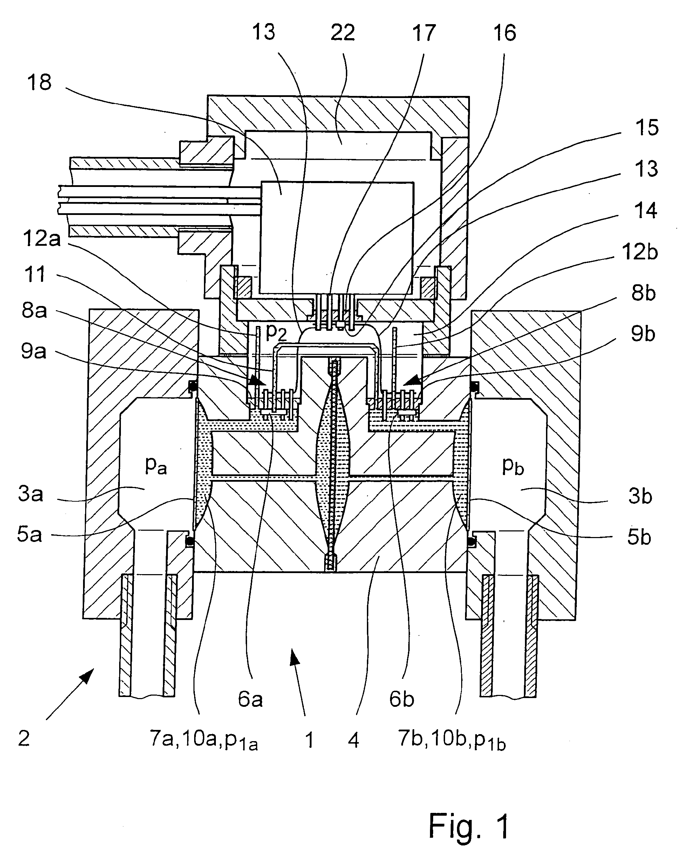

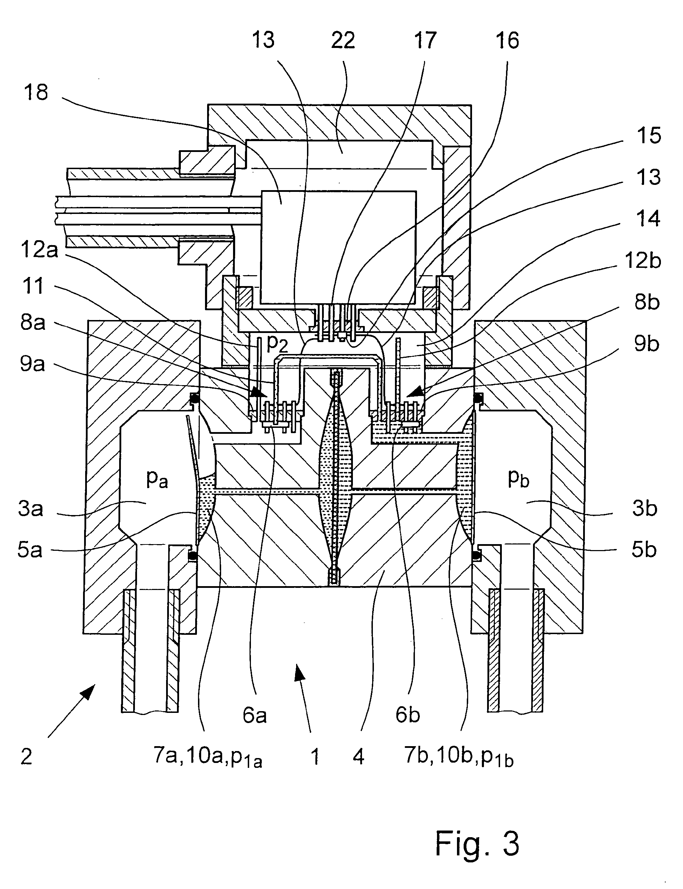

In den Fig. 1 bis 7 ist jeweils ein Druckmeßumformer 1 im Zusammenhang mit einem vollständigen Drucksensor 2 dargestellt, wobei es sich vorliegend um einen kombinierten Absolut- und Differenzdrucksensor handelt. Der Druckmeßumformer 1 dient zur Ermittlung wenigstens eines Drucks pₐ, p_{b} in einem Prozeßmedium 3a, 3b. Der Druckmeßumformer 1 weist auf ein Gehäuse 4 mit einer Trennmembran 5a, 5b, ein erstes Druckmeßelement 6a, 6b, ein Kontaktmedium 7a, 7b, mehrere Anschlußelemente 8a, 8b und eine erste Dichtung 9a, 9b. Da es sich bei dem dargestellten Druckmeßumformer 1 - jedenfalls auch - um einen Differenzdruckmeßumformer handelt, sind praktisch alle mit dem Meßvorgang gekoppelten Strukturen doppelt vorhanden, was jedoch nichts daran ändert, daß der beschriebene und dargestellte Druckmeßumformer 1 sowie der beschriebene und dargestellte Drucksensor 2 und das anhand der Figuren beschriebene Verfahren genauso gut auch mit einem einfachen (Absolut-) Drucksensor realisiert werden könnten.

Die Trennmembran 5a, 5b ist vorliegend aus Hastelloy gefertigt und trennt das Prozeßmedium 3a, 3b von dem Kontaktmedium 7a, 7b, wobei das Kontaktmedium 7a, 7b einerseits der möglichst ungedämpften Übertragung des Drucks pₐ, p_{b} im Prozeßmedium 3a, 3b zu dem ersten Druckmeßelement 6a, 6b gewährleisten soll und andererseits als Sperre fungiert zwischen einem möglicherweise aggressiven oder explosionsgefährlichen Prozeßmedium 3a, 3b und dem ersten Druckmeßelement 6a, 6b.

Es ist in den Fig. 1 bis 5 zu erkennen, daß das Gehäuse 4, die Trennmembran 5a, 5b und die erste Dichtung 9a, 9b eine erste Druckkammer 10a, 10b bilden, wobei das Kontaktmedium 7a, 7b die erste Druckkammer 10a, 10b vollständig ausfüllt.

Die erste Dichtung 9a, 9b nimmt das erste Anschlußelement 8a, 8b auf, wobei in den Fig. 1 bis 4 das erste Anschlußelement 8a und das erste Anschlußelement 8b jeweils mehrere Anschlußelemente umfassen, nämlich eine kommunizierende Röhre 11, die den Druck von der ersten Druckkammer 10b zu dem ersten Druckmeßelement 6a zwecks einer Differenzdruckmessung überträgt, einen Einfüllstutzen 12, der zum Befüllen der ersten Druckkammer 10a, 10b mit dem Kontaktmedium 7a, 7b dient und elektrische Leitungen 13, die elektrische Potentiale zu und von den ersten Anschlußelementen 8a, 8b leiten.

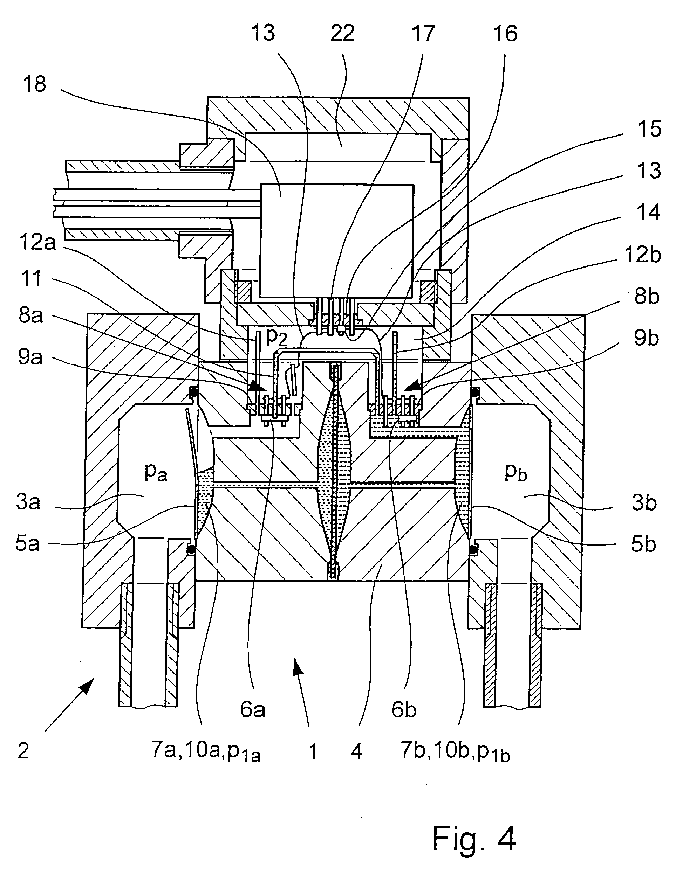

In Fig. 1 ist ein fehlerfreier Druckmeßumformer 1 dargestellt, der intakte Trennmembranen 5a, 5b und intakte erste Dichtungen 9a, 9b und damit geschlossene erste Druckkammern 10a, 10b aufweist. Von besonderer Gefährlichkeit ist die in Fig. 4 dargestellte Fehlersituation, bei der sowohl die Trennmembran 5a, 5b als auch die erste Dichtung 9a, 9b defekt sind, so daß das Kontaktmedium 7a, 7b keine Barriere mehr herstellt zwischen dem Prozeßmedium 3a, 3b und dem Raum auf der der ersten Druckkammer 10a, 10b abgewandten Seite der ersten Dichtung 9a, 9b, so daß - bei aus dem Stand der Technik bekannten, hier nicht dargestellten - Druckmeßumformern die Gefahr besteht, daß sich ein entzündliches Prozeßmedium an der elektrischen Beschaltung und den elektrischen Anschlüssen der ersten Druckmeßelemente 6a, 6b entzündet.

Um dies zu verhindern, ist der in den Fig. 1 bis 4 dargestellte Druckmeßumformer 1 so ausgestaltet, daß auf der der ersten Druckkammer 10a, 10b abgewandten Seite der ersten Dichtung 9a, 9b eine zweite Druckkammer 14 vorgesehen ist, und in der zweiten Druckkammer 14 ein zweites Druckmeßelement 15 angeordnet ist. Durch diese Maßnahme kann ein auch durch die erste Dichtung 9a, 9b gelangtes Prozeßmedium nicht sofort mit elektrischen Schaltungsteilen des übergeordneten Drucksensors 2 in Berührung kommen, sondern gelangt zunächst in die zweite Druckkammer 14, wobei das dort vorgesehene zweite Druckmeßelement 15 grundsätzlich die Möglichkeit eröffnet, aufgrund der veränderten Druckverhältnisse in der zweiten Druckkammer 14, den beschriebenen Fehlerfall zu erkennen.

Bei den in den Fig. 1 bis 4 dargestellten Druckmeßumformern 1 steht im fehlerfreien, dichtenden Zustand der ersten Dichtung 9a, 9b der Druck p₂ in der zweiten Druckkammer 14 in einer bestimmten Abhängigkeit vom Druck p₁ in der ersten Druckkammer 10a, 10b. Ferner weist die zweite Druckkammer 14 jeweils eine zweite Dichtung 16 auf, wobei die zweite Dichtung 16 wenigstens ein zweites Anschlußelement 17 aufnimmt und über das zweite Anschlußelement 17 das zweite Druckmeßelement 15 und - mittelbar - das erste Druckmeßelement 6a, 6b kontaktiert ist.

Bei anderen - hier nicht dargestellten - Ausführungsbeispielen ist im fehlerfreien, dichtenden Zustand der ersten Dichtung 9a, 9b der Druck p₂ in der zweiten Druckkammer 14 im wesentlichen unabhängig vom Druck p₁ₐ, p_{1b} in der ersten Druckkammer 10a, 10b, was durch eine besonders gute Abschottung der ersten Druckkammer 10a, 10b von der zweiten Druckkammer 14 realisiert ist. In den in den Fig. 1 bis 4 dargestellten Ausführungsbeispielen sind sowohl die erste Dichtung 9a, 9b als auch die zweite Dichtung 16 aus einem Glaswerkstoff hergestellt, der sehr gute Eigenschaften hinsichtlich seiner Korrosionsbeständigkeit hat.

Bei den in den Fig. 1 bis 4 dargestellten Druckmeßumformer 1 bzw. Drucksensoren 2 wird zur Zustandsüberwachung des Druckmeßumformers 1 ein Verfahren realisiert, bei dem der von dem zweiten Druckmeßelement 15 in der zweiten Druckkammer 14 ermittelte Druckwert p₂ mit einem vorgegebenen Druckwert verglichen wird und bei Überschreitung einer vorgegebenen Abweichung des für die zweite Druckkammer 14 ermittelten Druckwertes p₂ von dem vorgegebenen Druckwert ein Überschreitungssignal ausgegeben wird. Erst durch das zweite Druckmeßelement 15 in der zweiten Druckkammer 14 ist es möglich, über eine unerwartete Druckänderung einen Defekt im Übergang zwischen der ersten Druckkammer 10a, 10b und der zweiten Druckkammer 14 festzustellen.

Als Reaktion auf eine unzulässige Abweichung zwischen dem von dem zweiten Druckmeßelement 15 in der zweiten Druckkammer 14 ermittelten Druckwert p₂ und dem vorgegebenen Druckwert wird bei den dargestellten Druckmeßumformern 1 nicht nur ein Überschreitungssignal ausgegeben, sondern der Druckmeßumformer 1 wird elektrisch potentialfrei geschaltet, so daß ein in den Druckmeßumformer 1 eingedrungenes Prozeßmedium 3a, 3b (siehe Fig. 4) sich nicht mehr an unterschiedlichen elektrischen Potentialen entzünden kann.

Da es sich bei allen dargestellten Ausführungsbeispielen um einen solchen Druckmeßumformer 1 handelt, bei dem im fehlerfreien, dichtenden Zustand der ersten Dichtung 9a, 9b der Druck p₂ in der zweiten Druckkammer 14 in einer bestimmten Abhängigkeit vom Druck p₁ₐ, p_{1b} in der ersten Druckkammer 10a, 10b steht, ist hier vorgesehen, daß der vorgegebene Druckwert im wesentlichen der von dem ersten Druckelement 6a, 6b ermittelte Druck p₁ₐ, p_{1b} in der ersten Druckkammer 10a, 10b ist.

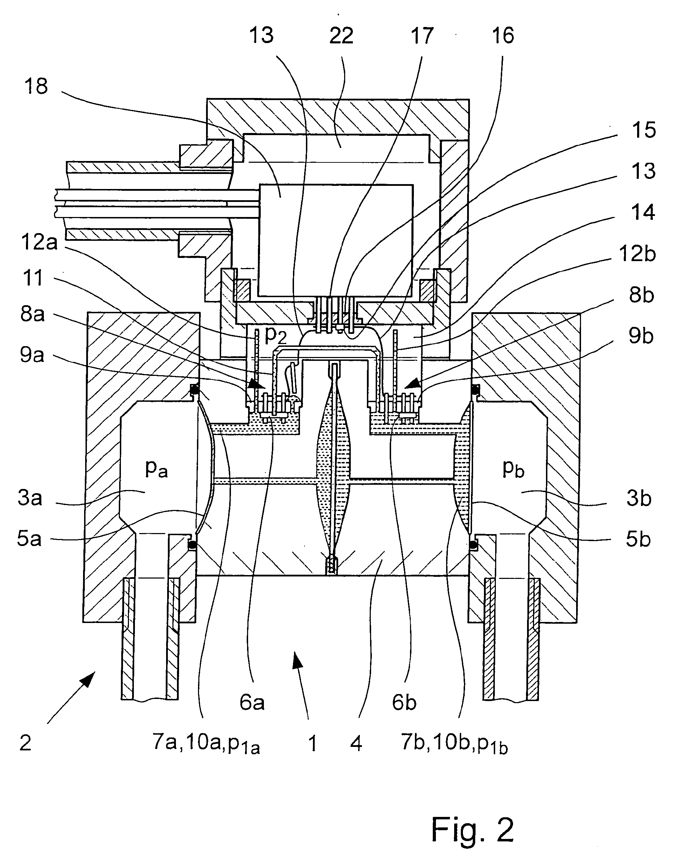

In Fig. 2 ist dargestellt, daß die erste Dichtung 9a, 9b ein Leck aufweist, durch das das Kontaktmedium 7a in die zweite Druckkammer 14 eindringen kann. Die in Fig. 2 dargestellte erste Dichtung 9a weist ein anderes Druckübertragungsverhalten auf, als die intakte Dichtung 9a in Fig. 1, so daß sich insgesamt ein Unterschied ergibt, bei den in den Fig. 1 und 2 dargestellten Situationen, wenn der von dem zweiten Druckmeßelement 15 in der zweiten Druckkammer 14 ermittelte Druckwert p₂ mit dem in der ersten Druckkammer 10a von dem ersten Druckmeßelement 6a erfaßten Druck verglichen wird, woraus sich der in Fig. 2 dargestellte Fehlerfall identifizieren läßt. Das gleiche gilt auch für den in Fig. 4 dargestellten Fehlerfall, bei dem zusätzlich die Trennmembran 5a defekt ist.

Aus dem zuvor gesagten ergibt sich, daß in den Fig. 1 bis 7 vollständige Drucksensoren 2 dargestellt sind, jeweils mit einem beschriebenen Druckmeßumformer 1 und zusätzlich mit einer elektronischen Auswerteeinrichtung 18, die mit dem Druckmeßumformer 1 bzw. mit dem ersten Druckmeßelement 6a, 6b und/oder dem zweiten Druckmeßelement 15 signalmäßig verbunden ist. Die Auswerteeinrichtung 18 ist in allen Ausführungsbeispielen so ausgestaltet, daß mit ihr das zuvor beschriebene Verfahren zur Zustandsüberwachung des Druckmeßumformers 1 durchgeführt werden kann.

In den Fig. 1 bis 4 ist die Auswerteeinrichtung 18 stets einteilig ausgeführt und in einer separaten Kammer 22 angeordnet, wobei die separate Kammer 22 von der zweiten Druckkammer 14 druckdicht abgeschottet ist. Die von dem ersten Druckmeßelement 6a, 6b und dem zweiten Druckmeßelement 15 stammenden elektrischen Leitungen 13 müssen separat durch die zweite Dichtung 16 geführt werden, damit die von ihnen transportierten Signale von der Auswerteeinrichtung 18 ausgewertet werden zu können.

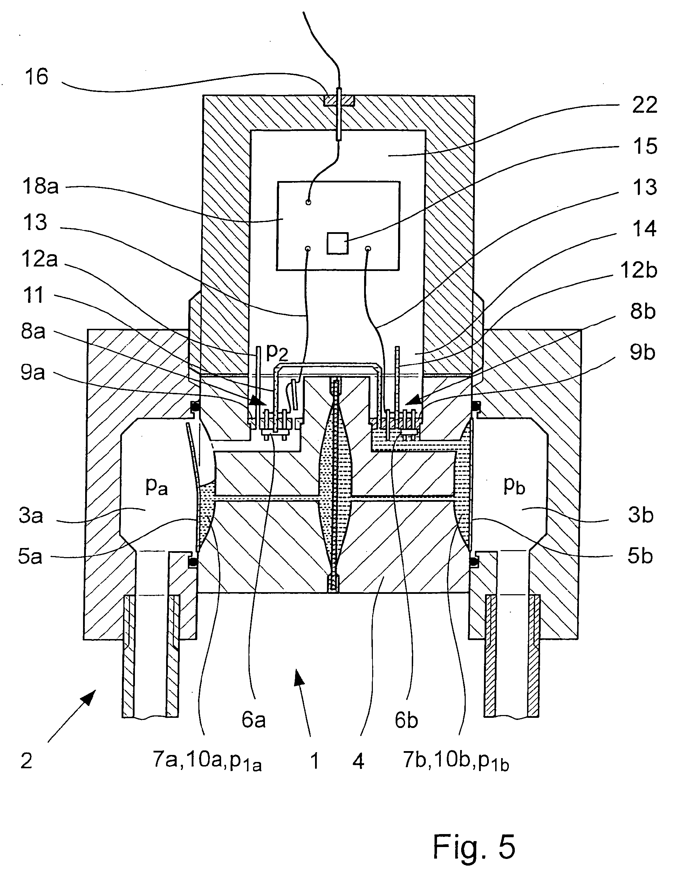

In Fig. 5 ist ein davon abweichendes Ausführungsbeispiel eines Drucksensors 2 dargestellt, bei dem die elektronische Auswerteeinrichtung 18 teilweise in der zweiten Druckkammer 14 vorgesehen ist, wobei das zweite Druckmeßelement 15 von der Auswerteeinrichtung 18 bzw. einem ersten Teil 18a der Auswerteeinrichtung 18 umfaßt ist, nämlich auf einer Platine der Auswerteeinrichtung 18a vorgesehen ist. Der Vorteil der Plazierung der Auswerteeinrichtung 18 bzw. eines ersten Teils 18a der Auswerteeinrichtung 18 in der zweiten Druckkammer 14 liegt unter anderem darin, daß die zweite Dichtung 16 sehr viel weniger aufwendig ausgeführt werden muß, da durch sie nur diejenigen elektrischen Signallinien zu führen sind, die für den Datenaustausch zwischen dem ersten Teil 18a der Auswerteeinrichtung 18 und dem zweiten Teil 18b der Auswerteeinrichtung 18 notwendig sind. Die Herstellung eines Drucksensors 2 mit einer zumindest teilweise in der zweiten Druckkammer 14 angeordneten Auswerteeinrichtung 18 ist besonders einfach realisierbar.

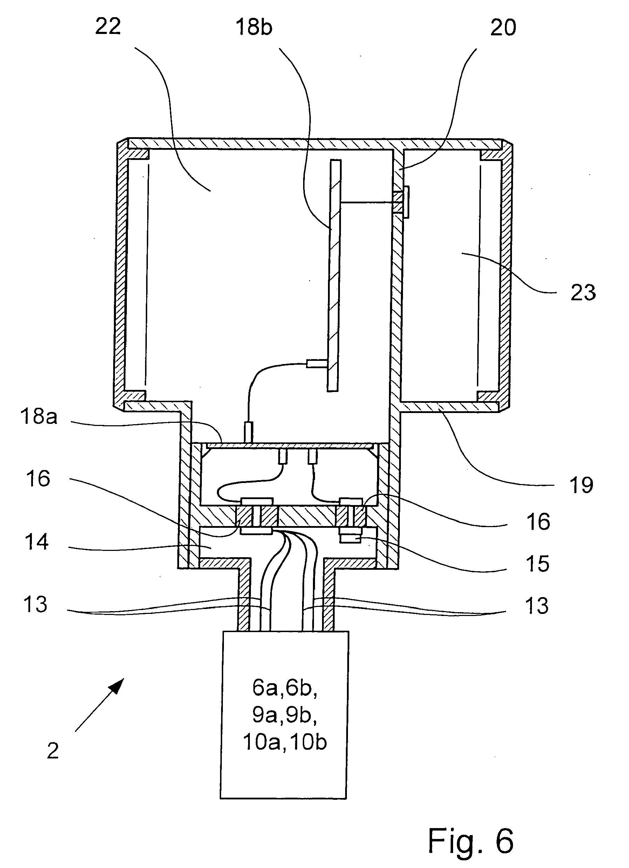

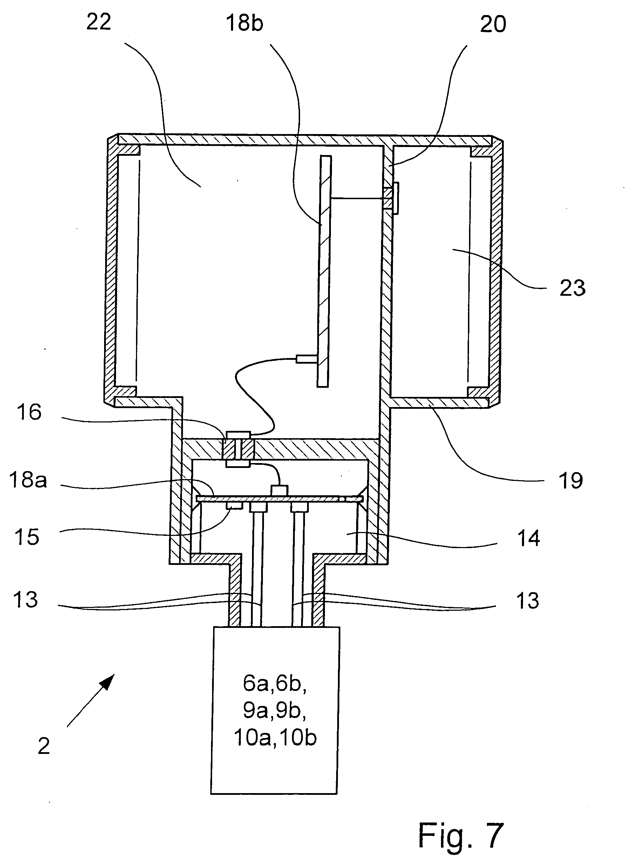

Die Fig. 6 und 7 zeigen ein weiteres Ausführungsbeispiel eines Drucksensors 2, der sich von den Drucksensoren 2 gemäß den Fig. 1 bis 5 unterscheidet. In den Fig. 6 und 7 ist - anders als in den Fig. 1 bis 5 das erste Druckmeßelement 6a, 6b die erste Dichtung 9a, 9b und die erste Druckkammer 10a, 10b nur schematisch als Block dargestellt, es ist lediglich zu erkennen, daß die elektrischen Leitungen 13 in die zweite Druckkammer 14 eintreten. Der Drucksensor 2 gemäß Fig. 6 entspricht grundsätzlich den Drucksensoren 2 gemäß den Fig. 1 bis 4, da die Auswerteeinrichtung 18, bestehend aus dem ersten Teil 18a und dem zweiten Teil 18b der Auswerteeinrichtung, nicht - und auch nicht teilweise - in der zweiten Druckkammer 14 angeordnet ist. Auch hier zeigt sich wiederum die Notwendigkeit, für das zweite Druckmeßelement 15 und die elektrischen Leitungen 13 der ersten Druckmeßelemente 6a, 6b Durchführungen vorzusehen, wobei alle Signalleitungen letztlich mit dem ersten Teil 18a der Auswerteeinrichtung 18 verbunden sind. Das Gehäuse 19 umgibt die Auswerteeinrichtung 18, wobei eine Trennwand 20 innerhalb des Gehäuses 19 die separate Kammer 22, in der die Auswerteeinrichtung 18 - zumindest teilweise - untergebracht ist, von einem Anschlußraum 23 abtrennt.

Der Drucksensor 2 gemäß Fig. 7 entspricht vom Aufbau her dem Drucksensor 2 gemäß Fig. 5, bei dem der erste Teil 18a der Auswerteeinrichtung 18 innnerhalb der zweiten Druckkammer 14 angeordnet ist. Auch anhand dieses Drucksensors 2 ist der Vorteil einer konstruktiv einfach zu realisierenden zweiten Dichtung 16 ohne weiteres erkennbar, insbesondere auch im Vergleich zu dem Drucksensor 2 gemäß Fig. 6. Durch die zweite Dichtung 16 ist nur eine Signalverbindung zwischen dem ersten Teil 18a der Auswerteeinrichtung 18 und dem zweiten Teil 18b der Auswerteeinrichtung 18 geführt, wobei dies nicht einschränkend dahingehend zu verstehen ist, daß nur eine einzige Leitung durch die zweite Dichtung 16 geführt ist. Vielmehr kann es sich auch um mehrere Leitungen handeln, die dazu notwendig sind, die von dem ersten Teil 18a der Auswerteeinrichtung 18 bereitgestellten Daten/Signale zu dem zweiten Teil 18b der Auswerteeinrichtung 18 zu übermitteln; es kann sich beispielsweise um eine serielle Signalverbindung handeln.

## Patentansprüche

1. Druckmeßumformer für einen Drucksensor (2) zur Ermittlung wenigstens eines Drucks (pₐ, p_{b}) in einem Prozeßmedium (3a, 3b) mit einem Gehäuse (4), mit einer Trennmembran (5a, 5b), wenigstens einem ersten Druckmeßelement (6a, 6b), einem Kontaktmedium (7a, 7b), wenigstens einem ersten Anschlußelement (8a, 8b) und mit wenigstens einer ersten Dichtung (9a, 9b), wobei die Trennmembran (5a, 5b) das Prozeßmedium (3a, 3b) von dem Kontaktmedium (7a, 7b) trennt, das Kontaktmedium (7a, 7b) den über die Trennmembran (5a, 5b) vermittelten Druck (pₐ, p_{b}) des Prozeßmediums (3a, 3b) zu dem ersten Druckmeßelement (6a, 6b) überträgt, die erste Dichtung (9a, 9b) das erste Anschlußelement (8a, 8b) aufnimmt und wobei das Gehäuse (4), die Trennmembran (5a, 5b) und die erste Dichtung (9a, 9b) eine erste Druckkammer (10a, 10b) bilden,
**dadurch gekennzeichnet,**
**daß** auf der der ersten Druckkammer (10a, 10b) abgewandten Seite der ersten Dichtung (9a, 9b) eine zweite Druckkammer (14) vorgesehen ist und in der zweiten Druckkammer (14) ein zweites Druckmeßelement (15) angeordnet ist.

2. Druckmeßumformer nach Anspruch 1, **dadurch gekennzeichnet, daß** im fehlerfreien, dichtenden Zustand der ersten Dichtung (9a, 9b) der Druck (p₂) in der zweiten Druckkammer (14) im wesentlichen unabhängig vom Druck (p₁ₐ, p_{1b}) in der ersten Druckkammer (10a, 10b) ist oder daß im fehlerfreien, dichtenden Zustand der ersten Dichtung (9a, 9b) der Druck (p₂) in der zweiten Druckkammer (14) in einer bestimmten Abhängigkeit vom Druck (p₁) in der ersten Druckkammer (10a, 10b) steht.

3. Druckmeßumformer nach einem der Ansprüche 1 oder 2, **dadurch gekennzeichnet, daß** die zweite Druckkammer (14) eine zweite Dichtung (16) aufweist, wobei die zweite Dichtung (16) wenigstens ein zweites Anschlußelement (17) aufnimmt und über das zweite Anschlußelement (17) das zweite Druckmeßelement (15) und/oder - mittelbar - das erste Druckmeßelement (6a, 6b) kontaktiert ist.

4. Druckmeßumformer nach einem der Ansprüche 1 bis 3, **dadurch gekennzeichnet, daß** die erste Dichtung (9a, 9b) und/oder die zweite Dichtung (16) aus einem Keramik- oder Glaswerkstoff hergestellt ist, insbesondere durch Sinterung.

5. Verfahren zur Zustandsüberwachung eines Druckmeßumformers (1) nach einem der Ansprüche 1 bis 4, wobei der Druckmeßumformer (1) zur Ermittlung eines Drucks (pₐ, p_{b}) in einem Prozeßmedium (3a, 3b) vorgesehen ist und ein Gehäuse (4), eine Trennmembran (5a, 5b), wenigstens ein erstes Druckmeßelement (6a, 6b), ein Kontaktmedium (7a, 7b), wenigstens ein erstes Anschlußelement (8a, 8b) und wenigstens eine erste Dichtung (9a, 9b) umfaßt, wobei die Trennmembran (5a, 5b) das Prozeßmedium (3a, 3b) von dem Kontaktmedium (7a, 7b) trennt, das Kontaktmedium (7a, 7b) den über die Trennmembran (5a, 5b) vermittelten Druck (pₐ, p_{b}) des Prozeßmediums (3a, 3b) zu dem ersten Druckmeßelement (6a, 6b) überträgt, die erste Dichtung (9a, 9b) das erste Anschlußelement (8a, 8b) aufnimmt und wobei das Gehäuse (4), die Trennmembran (5a, 5b) und die erste Dichtung (9a, 9b) eine erste Druckkammer (10a, 10b) bilden, wobei auf der der ersten Druckkammer (10a, 10b) abgewandten Seite der ersten Dichtung (9a, 9b) eine zweite Druckkammer (14) vorgesehen ist und in der zweiten Druckkammer (14) ein zweites Druckmeßelement (15) angeordnet ist.
**dadurch gekennzeichnet,**
**daß** der von dem zweiten Druckmeßelement (15) in der zweiten Druckkammer (14) ermittelten Druckwert (p₂) mit einem vorgegebenen Druckwert verglichen wird und bei Überschreitung einer vorgegebenen bzw. vorzugebenden Abweichung des für die zweite Druckkammer (14) ermittelten Druckwertes (p2) von dem vorgegeben Druckwert ein Überschreitungssignal ausgegeben wird.

6. Verfahren nach Anspruch 5, **dadurch gekennzeichnet, daß** der Druckmeßumformer (1) bzw. das erste Druckmeßelement (9a, 9b) und/oder das zweite Druckmeßelement (16) des Druckmeßumformers (1) elektrisch potentialfrei oder auf ein festes elektrisches Potential geschaltet wird bzw. werden.

7. Verfahren nach Anspruch 5 oder 6, **dadurch gekennzeichnet, daß** der vorgegebene bzw. vorgebbare Druckwert ein im wesentlichen konstanter Druckwert ist, insbesondere, wenn der Druckmeßumformer (1) so ausgestaltet ist, daß im fehlerfreien, dichtenden Zustand der ersten Dichtung (9a, 9b) der Druck (p₂) in der zweiten Druckkammer im wesentlichen unabhängig vom Druck (p₁ₐ, p_{1b}) in der ersten Druckkammer (10a, 10b) ist.

8. Verfahren nach Anspruch 5 oder 6, **dadurch gekennzeichnet, daß** der vorgegebene bzw. vorgebbare Druckwert der von dem ersten Druckelement (6a, 6b) ermittelte Druck (p₁ₐ, p_{1b}) in der ersten Druckkammer (10a, 10b) ist, insbesondere dann, wenn der Druckmeßumformer (1) so ausgestaltet ist, daß im fehlerfreien, dichtenden Zustand der ersten Dichtung (9a, 9b) der Druck (p₂) in der zweiten Druckkammer (14) in einer bestimmten Abhängigkeit vom Druck (p₁ₐ, p_{1b}) in der ersten Druckkammer (10a, 10b) steht.

9. Verfahren nach Anspruch 8, **dadurch gekennzeichnet, daß** bei Beurteilung der Abweichung des von dem zweiten Druckmeßelement (15) in der zweiten Druckkammer (14) ermittelten Druckwertes (p₂) von einem vorgegebenen Druckwert auch die dynamische Veränderung des in der zweiten Druckkammer (14) ermittelten Druckwertes (p₂) und/oder des vorgegebenen Druckwertes berücksichtigt wird, insbesondere zeitliche Ableitungen der Druckwerte und/oder Totzeiten zwischen den zu vergleichenden Druckwerten.

10. Drucksensor mit einem Druckmeßumformer nach einem der Ansprüche 1 bis 4 und mit einer elektronischen Auswerteeinrichtung (18, 18a, 18b), die mit dem Druckmeßumformer (1) bzw. mit dem ersten Druckmeßelement (6a, 6b) und/oder dem zweiten Druckmeßelement (15) signalmäßig verbunden ist,
**dadurch gekennzeichnet,**
**daß** die Auswerteeinrichtung (18, 18a, 18b) so ausgestaltet ist, daß mit ihr ein Verfahren zur Zustandsüberwachung eines Druckmeßumformers (1) nach einem der Ansprüche 5 bis 9 durchgeführt werden kann.

11. Drucksensor nach Anspruch 10, **dadurch gekennzeichnet, daß** die elektronische Auswerteeinrichtung (18, 18a, 18b) zumindest teilweise in der zweiten Druckkammer (14) vorgesehen ist, wobei das zweite Druckmeßelement (15) insbesondere von der Auswerteeinrichtung (18, 18a, 18b) umfaßt ist, vorzugsweise auf einer Platine der Auswerteeinrichtung (18, 18a, 18b) vorgesehen ist.

12. Drucksensor nach Anspruch 11, **dadurch gekennzeichnet, daß** durch die zweite Dichtung (16) nur eine Signalverbindungen zwischen einem ersten Teil (18a) der Auswerteeinrichtung (18, 18a, 18b) und einem zweiten Teil (18b) der Auswerteeinrichtung (18, 18a, 18b) geführt ist.
